# FASCICULE DE BREVET EUROPEEN

(11) **EP 1 293 658 B1**
(45) Date de publication et mention de la délivrance du brevet: **05.12.2007**
(21) Numéro de dépôt: 02292191.0
(22) Date de dépôt: 06.09.2002
(51) Int. Cl.: F02D 23/02, F02B 37/18, F01N 9/00

(54) **Procédé et système de réglage du flux d'air dans le collecteur d'admission d'un moteur à combustion interne d'un véhicule automobile**
Verfahren und Einrichtung zur Regelung des Luftstromes in einem Ansaugkrümmer einer Brennkraftmaschine eines Kraftfahrzeuges
Method and system for controlling the air flow in an intake manifold of an internal combustion engine of a vehicle

(30) Priorité: 12.09.2001 FR 0111807
(43) Date de publication de la demande: 19.03.2003
(73) Titulaire: RENAULT S.A.S., 92100 Boulogne Billancourt (FR)
(72) Inventeur: Besnard, Jean-Jacques, 75014 Paris (FR); Fontvieille, Laurent, 91700 Sainte Geneviève des Bois (FR)

(56) Documents cités:
- EP-A- 1 081 347
- WO-A-01/55575
- WO-A-97/45633
- FR-A- 2 774 421
- US-A- 4 615 172
- US-A- 5 228 292
- US-A- 5 850 737
- US-A- 6 134 890
- US-A- 6 155 049

## Description

La présente invention concerne un procédé de réglage du flux d'air dans le collecteur d'admission d'un moteur à combustion interne. Elle se rapporte également à un système de réglage de ce flux d'air.

Plus particulièrement, l'invention concerne un procédé et un système de réglage du flux d'air admis dans le collecteur d'admission d'un moteur à combustion interne équipé d'un turbocompresseur de suralimentation du moteur en air qui est entraîné par des gaz d'échappement du moteur.

Une application particulièrement intéressante d'un tel procédé et d'un tel système est le réglage du flux d'air dans le collecteur d'admission d'un moteur à combustion interne, de type Diesel, d'un véhicule automobile.

Les véhicules automobiles, et en particulier les véhicules automobiles de type Diesel, sont très souvent équipés d'un turbocompresseur de suralimentation du moteur en air, destiné à augmenter la quantité d'air admise dans les cylindres. Ce turbocompresseur est généralement constitué d'une turbine, placée à la sortie du collecteur d'échappement du moteur et entraînée par les gaz d'échappement, et d'un compresseur, par exemple monté sur le même axe que la turbine, assurant une compression de l'air qui entre dans le collecteur d'admission.

Dans ce cas, le turbocompresseur est associé à un organe de réglage de la puissance des gaz d'échappement destiné à réguler la pression régnant dans le collecteur autour d'une valeur de consigne de pression élaborée, par exemple, par apprentissage préalable, en fonction du régime du moteur et du débit du carburant. Cet organe de réglage peut être constitué par une soupape de décharge, ou par des ailettes, dans le cas d'un turbocompresseur à géométrie variable,.

Par ailleurs, on équipe aujourd'hui couramment les moteurs de type Diesel d'un filtre à particules, monté sur la ligne d'échappement du moteur, de manière à minimiser la quantité de particules rejetées vers l'atmosphère.

Ces filtres sont classiquement constitués d'un ensemble de micro-canaux dans lesquels une grande partie des particules se trouve piégée.

Une fois le filtre plein, il est nécessaire de mettre en oeuvre une phase de régénération, consistant essentiellement à vider le filtre en brûlant les particules. Cette régénération peut être obtenue, soit par un dispositif de chauffage prévu à cet effet, soit en prévoyant des phases de fonctionnement du moteur selon des paramètres spécifiques.

Le filtre à particules étant placé dans la ligne d'échappement après le turbocompresseur, l'introduction d'un tel dispositif engendre une élévation de pression en aval de la turbine du turbocompresseur.

Cette élévation de pression, qui est d'autant plus importante que le filtre est chargé en particules, se traduit par une réduction du taux de détente du turbocompresseur, par une réduction de la puissance fournie par les gaz d'échappement à la turbine et par une diminution consécutive des performances du moteur.

Dans le but de disposer du même niveau de performances, il est nécessaire de maintenir le taux de détente sensiblement constant. Ceci est généralement effectué en augmentant la pression en amont de la turbine. Cette augmentation de pression est généralement obtenue en agissant sur l'organe de réglage. Ainsi, dans le cas où le turbocompresseur est associé à une soupape de décharge, cette opération est réalisée en fermant la soupape.

L'augmentation de la pression en aval du turbocompresseur, qui se traduit par une diminution de la pression régnant dans le collecteur d'admission, est alors compensée par l'unité centrale par une augmentation de la pression en amont de la turbine.

Comme on le conçoit, ce type de technique permet de réguler relativement efficacement la pression de l'air admise dans le collecteur d'admission du moteur.

Elle présente cependant un inconvénient majeur, relatif au fait, notamment, qu'elle ne prévoit pas de contrôle de la pression en amont de la turbine.

En effet, une élévation de pression trop importante en amont de la turbine du turbocompresseur risque d'engendrer des dysfonctionnements au sein de ce dernier et, en particulier, de provoquer des défauts d'étanchéité. Elle peut également provoquer une réouverture des soupapes d'admission et de fuite sur le circuit de suralimentation en air.

On connaît également du document WO97/45633 un procédé de commande d'un turbocompresseur selon la première partie de la revendication 1 (et 12), dans lequel on élabore des signaux de commande pour réguler la pression dans les collecteurs d'admission et d'échappement, et la vitesse de rotation du turbocompresseur.

Le but de l'invention est donc de pallier les inconvénients de l'état de la technique et de fournir un procédé et un système de réglage du flux d'air dans le collecteur d'admission d'un moteur à combustion interne, permettant de limiter la pression en amont de la turbine du turbocompresseur de manière à éviter toute détérioration de ce dernier.

Ainsi, selon l'invention, il est proposé un procédé de réglage du flux d'air dans le collecteur d'admission d'un moteur à combustion interne d'un véhicule automobile équipé d'un turbocompresseur de suralimentation du moteur en air qui est entraîné par les gaz d'échappement du moteur, comprenant la mesure de la pression régnant dans le collecteur d'admission et la commande d'un organe de réglage de la puissance des gaz d'échappement, de manière à réguler la pression régnant dans le collecteur autour d'une première valeur de consigne de pression.

Selon un aspect de ce procédé, on mesure la pression régnant en amont de la turbine du turbocompresseur, en considérant le sens d'écoulement des gaz dans ce dernier et l'on commande ledit organe de réglage de manière à réguler la valeur de la pression en amont de la turbine du turbocompresseur autour d'une deuxième valeur de consigne de pression correspondant à une valeur maximale de pression autorisée en amont de la turbine du turbocompresseur.

Selon un aspect de ce procédé, on élabore un signal d'activation et de désactivation de la régulation de la pression en amont de la turbine du turbocompresseur en fonction de la valeur de la pression dans le collecteur d'admission et de la pression en amont de la turbine du turbocompresseur et en fonction des première et deuxième valeurs de seuil.

De préférence, on désactive la régulation de la pression en amont de la turbine du turbocompresseur lorsque la valeur de la pression dans le collecteur d'admission est supérieure ou égale à la première valeur de consigne.

Avantageusement, on désactive la régulation de la pression régnant dans le collecteur d'admission lorsque la pression régnant en amont de la turbine du turbocompresseur est supérieure à la deuxième valeur de consigne.

Selon un autre mode de mise en oeuvre, la régulation de la pression régnant dans le collecteur d'admission est effectuée au moyen d'une boucle de régulation recevant en entrée la première valeur de consigne et le signal de mesure de la pression régnant dans le collecteur d'admission et délivrant en sortie un signal de commande de l'organe de réglage, et l'on pilote des moyens de commutation disposés en entrée de la boucle de régulation de manière à présenter en entrée de cette dernière, d'une part, l'un ou l'autre des signaux de mesure de pression parmi le signal de mesure de la pression en amont de la turbine du turbocompresseur et le signal de mesure de la pression dans le collecteur et, d'autre part, l'une ou l'autre des première et deuxième valeur de consigne, en fonction de la valeur du signal d'activation et de désactivation de la régulation de la pression en amont de la turbine du turbocompresseur.

La deuxième valeur de consigne peut être élaborée à partir d'une valeur de consigne en régime transitoire et d'une valeur de consigne en régime permanent, inférieure à la valeur de consigne en régime transitoire, et en ce que ladite deuxième valeur de consigne est positionnée à une valeur égale à la valeur de consigne en régime transitoire lors d'une transition du signal d'activation et de désactivation de la régulation de la pression en amont de la turbine du turbocompresseur tendant à activer cette régulation et est positionnée à une valeur égale à la valeur de consigne en régime permanent à l'expiration d'une période de temps prédéterminée.

Selon une autre caractéristique de ce procédé, l'on procède à l'activation de la régulation de la pression en amont de la turbine du turbocompresseur à l'expiration d'une période de temps prédéterminée après apparition d'une transition dudit signal d'activation et de désactivation tendant à activer cette régulation,.

Selon un autre mode de mise en oeuvre avantageux, on régule la pression régnant dans le collecteur d'admission à partir de la régulation de la pression en amont de la turbine du turbocompresseur en cas de dysfonctionnement de moyens de mesure de la pression dans le collecteur d'admission.

En cas de dysfonctionnement desdits moyens de mesure, la deuxième valeur de consigne de pression est avantageusement élaborée en fonction du régime de fonctionnement du moteur et de la consommation en carburant de ce dernier.

Un autre mode de mise en oeuvre prévoit la surveillance de la durée d'activation de la régulation de la pression en amont de la turbine du turbocompresseur On provoque une régénération d'un filtre à particules équipant la ligne d'échappement du moteur en cas d'activation de cette régulation de pression pendant une durée supérieure à une valeur de seuil.

On surveille, selon une autre caractéristique du procédé selon l'invention, la durée d'activation de ladite régulation en comparant la sortie d'un circuit d'exécution d'une fonction intégrale activé en ces d'activation de la régulation avec ladite valeur de seuil.

Dans ce cas, on module de préférence la valeur de facteurs de proportionnalité et d'intégrale du circuit d'exécution de la fonction intégrale en fonction de la différence entre la pression régnant en amont de la turbine du turbocompresseur et la deuxième valeur de consigne.

Selon l'invention, il est également proposé un système de réglage du flux d'air dans le collecteur d'admission d'un moteur à combustion interne équipé d'un turbocompresseur de suralimentation du moteur en air qui est entraîné par les gaz d'échappement et d'une ligne d'échappement pourvue d'un filtre à particules, comprenant des moyens de mesure de la pression régnant dans le collecteur d'admission et un organe de réglage de la puissance des gaz d'échappement raccordés à une unité centrale comprenant une boucle de régulation pilotant l'organe de réglage de manière à réguler la pression régnant dans le collecteur d'admission autour d'une première valeur de consigne.

Selon un aspect de ce système, ce dernier comporte en outre des moyens de mesure de la pression régnant en amont de la turbine du turbocompresseur et des moyens de régulation pilotant l'organe de réglage de manière à réguler la pression en amont du turbocompresseur autour d'une deuxième valeur de consigne.

Selon un aspect de ce système, les moyens de régulation sont formés à partir de ladite boucle de régulation, et en ce qu'il comporte des moyens de commutation pour présenter en entrée de cette dernière, d'une part, l'un ou l'autre des signaux de mesure de pression parmi le signal de mesure de la pression en amont de la turbine du turbocompresseur et le signal de mesure de la pression dans le collecteur et, d'autre part, l'une ou l'autre des première et deuxième valeurs de consigne.

D'autres buts et avantages de l'invention ressortiront de la description suivante, donnée uniquement à titre d'exemple, et faite en référence aux dessins annexés, sur lesquels :
- la figure 1 illustre, de manière schématique, la structure d'un moteur à combustion interne, de type Diesel, d'un véhicule automobile pourvu d'un système de réglage conforme à l'invention ;
- la figure 2 est un schéma synoptique d'un exemple de réalisation du système de réglage conforme à l'invention ;
- la figure 3 montre des courbes illustrant la stratégie de régulation du flux d'air dans le collecteur d'admission du moteur ;
- la figure 4 montre des courbes illustrant la stratégie d'élaboration de la deuxième valeur de consigne de pression ;
- la figure 5 est un schéma synoptique montrant un exemple d'élaboration de la deuxième valeur de consigne en cas de dysfonctionnement du capteur de pression dans le collecteur d'admission ;
- la figure 6 est un schéma synoptique illustrant la procédure de régénération du filtre à particules ; et
- les figures 7a à 7d montrent des courbes illustrant la variation, en fonction du temps, de signaux extraits du schéma de la figure 6.

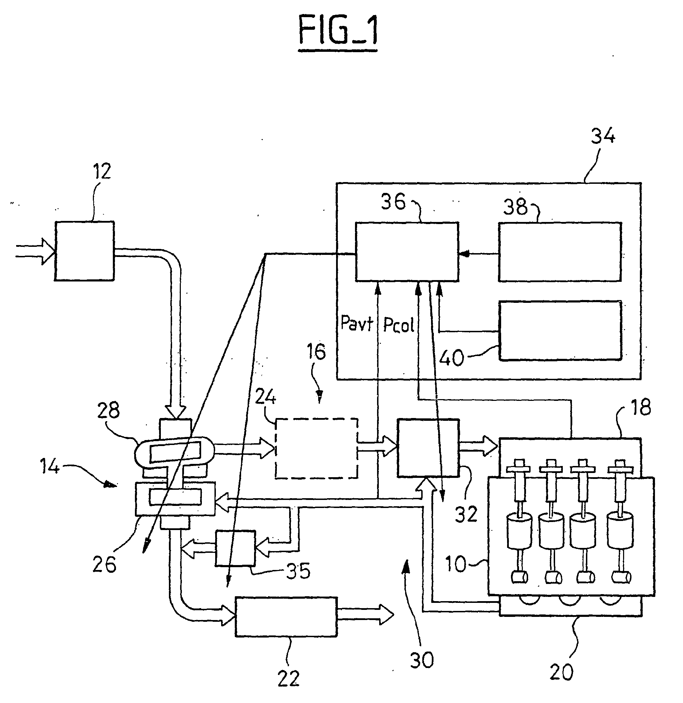

Sur la figure 1, on a représenté, de manière schématique, la structure générale d'un moteur 10 à combustion interne d'un véhicule automobile, de type Diesel, ainsi que ses collecteurs d'admission d'air frais et d'échappement.

Comme on le voit sur cette figure, le circuit d'admission d'air frais dans le moteur 10 comporte essentiellement un filtre à air 12 alimentant, par l'intermédiaire d'un turbocompresseur 14 et de conduites 16 appropriées, le collecteur d'admission 18 du moteur 10.

En ce qui concerne le collecteur d'échappement 20, celui-ci récupère les gaz d'échappement issus de la combustion et évacue ces derniers vers l'extérieur, par l'intermédiaire du turbocompresseur 14 et d'un filtre à particules 22 destiné à réduire la quantité de particules, notamment de suies, rejetées dans l'environnement.

Un échangeur thermique 24 optionnel équipant la conduite 16 d'alimentation du collecteur d'admission 18 en air frais, est disposé en relation d'échange thermique avec les gaz d'échappement, de manière à récupérer une partie des calories véhiculées par ces derniers.

Le turbocompresseur 14 comporte essentiellement une turbine 26 entraînée par les gaz d'échappement et un compresseur 28 monté sur le même axe que la turbine et assurant une compression de l'air distribué par le filtre à air 12, dans le but d'augmenter la quantité d'air admise dans les cylindres du moteur.

Par ailleurs, le moteur 10 est en outre associé à un circuit 30 de recirculation des gaz d'échappement, servant à réinjecter une partie de ces gaz dans le collecteur d'admission 18 de manière à, en particulier, limiter la quantité d'oxyde d'azote produit tout en évitant la formation de fumée dans les gaz d'échappement.

Ce circuit 30 comporte essentiellement une électrovanne 32 disposée entre le turbocompresseur 14 et le collecteur d'admission 18 et récupérant une partie des gaz d'échappement issue du collecteur d'échappement 20.

Par ailleurs, une unité centrale, désignée par la référence numérique 34, récupère des signaux P_{col} et Pₐᵥₜ de mesure de la pression régnant respectivement dans le collecteur d'admission et en amont de la turbine 26 du turbocompresseur, délivrés par des capteurs de mesure appropriés prévus à cet effet (non représentés). Elle agit sur la soupape de réglage 32 et sur un organe de réglage de la puissance des gaz d'échappement 35, constitué par exemple par une soupape de décharge appropriée, de manière à réguler la valeur de la pression régnant dans le collecteur d'admission 18 et en amont de la turbine 26 du turbocompresseur 14 autour de valeurs de consigne respectives.

Plus particulièrement, l'unité centrale 34 incorpore un étage de régulation de pression 36 recevant en entrée les signaux de mesure de pression P_{col} et Pₐᵥₜ ,un premier étage 38 d'élaboration d'une première valeur de consigne de pression correspondant à une valeur maximale de pression autorisée pour le collecteur d'admission 18 ainsi qu'un deuxième étage 40 d'élaboration d'une deuxième valeur de consigne de pression correspondant à une valeur maximale de pression autorisée en amont de la turbine 26 du turbocompresseur 14.

L'étage de régulation 36 ainsi que le premier étage 38 d'élaboration de la première valeur de consigne servent, conjointement, à réguler la valeur de la pression de l'air admis dans le collecteur d'admission 18, par action sur la soupape de décharge 35, de manière à obtenir des performances requises et à limiter la quantité d'oxyde d'azote produit, tout en limitant la quantité de fumées produites dans les gaz d'échappement.

L'étage de régulation 36 assure également, conjointement avec le deuxième étage 40 d'élaboration de la deuxième valeur de consigne, une régulation de la pression régnant en amont de la turbine 26 du turbocompresseur, par action sur la soupape de décharge 35, de manière à éviter qu'elle n'augmente, sous l'effet d'une charge accrue en particules dans le filtre à particules 22, au-delà d'une valeur à partir de laquelle des fuites seraient susceptibles d'intervenir dans le turbocompresseur 14 et, en particulier, dans la turbine 26.

La régulation de la pression en amont de la turbine 26 du turbocompresseur est prioritaire. Ainsi, et comme on le conçoit, la limitation de la pression en amont de la turbine, destinée à protéger le turbocompresseur 14, s'effectue au détriment de la régulation de pression dans le collecteur 18.

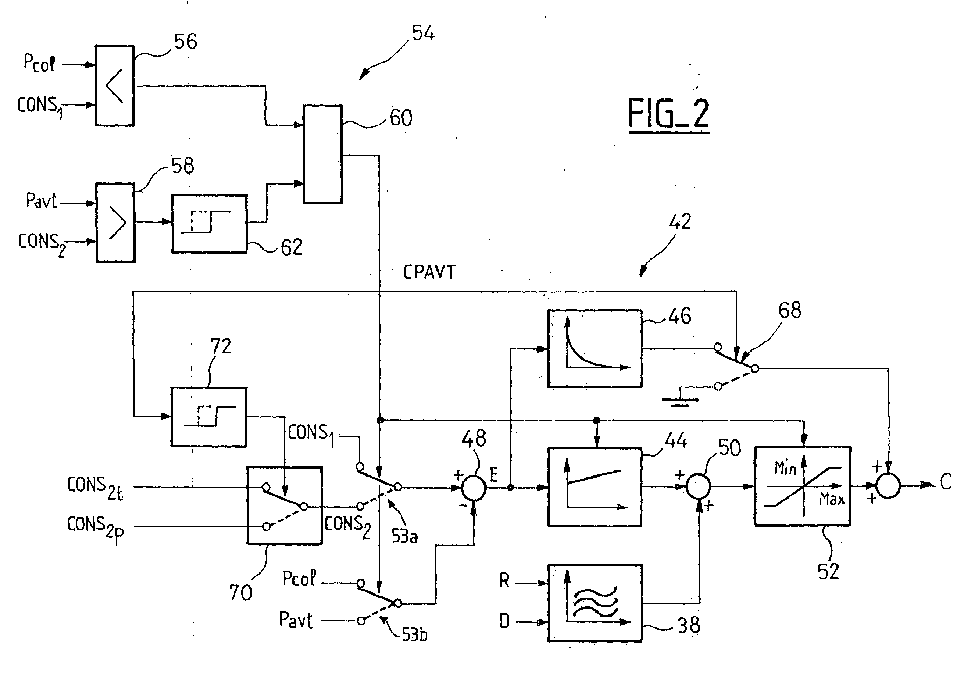

On va maintenant décrire, en référence à la figure 2, la structure des étages 36, 38 et 40 entrant dans la constitution de l'unité centrale 34.

On notera que les principaux éléments entrant dans la constitution de ces étages, peuvent être réalisés sous la forme de moyens matériels ou de moyens logiciels sous la forme de lignes de code stockées dans des moyens de mémorisation incorporés à l'unité centrale 34.

En ce qui concerne le premier étage 38 d'élaboration de la première valeur de consigne de pression, on notera que, par exemple, cet étage est constitué par une zone-mémoire à deux entrées dans laquelle sont chargées des données, obtenues par apprentissage préalable, constituées par un ensemble de valeurs de consigne de pression CONS₁ correspondant chacune à un régime de fonctionnement du moteur et à un niveau de consommation en carburant.

En ce qui concerne le deuxième étage 40 d'élaboration de la deuxième valeur de consigne, celui-ci est également constitué par une zone-mémoire dans laquelle est chargée une valeur de consigne CONS₂ correspondant à une valeur maximale de pression à partir de laquelle des dysfonctionnements sont susceptibles d'apparaître au sein du turbocompresseur 14.

Cette valeur de consigne CONS₂ est, de préférence, complétée par une valeur de consigne CONS₂ₜ correspondant à une- valeur de consigne en régime transitoire et par une valeur de consigne CONS₂ₚ correspondant à une valeur de consigne en régime permanent dans la mesure où, en particulier, lors de phases d'accélération, la turbine peut temporairement supporter un niveau de pression plus élevé, ainsi que par d'autres données servant à l'élaboration de la deuxième valeur de consigne, comme cela sera décrit par la suite.

Comme on le voit sur la figure 2, l'étage 36 de régulation de pression comporte essentiellement un circuit 42 de régulation proprement dit, de type classique, constitué par exemple, comme dans l'exemple de réalisation représenté, par un régulateur de type proportionnel-intégral-dérivé. Dans ce cas, il comporte une première partie 44 de régulation de type proportionnel-intégral et une deuxième partie 46 de régulation de type dérivé.

On pourrait cependant utiliser, en variante, un régulateur de type proportionnel-intégral.

Comme cela est classique, le circuit de régulation 42 reçoit, en entrée, un signal d'erreur E délivré par un comparateur 48 assurant, soit la comparaison entre la première valeur de consigne CONS₁ et le signal de mesure P_{col} de pression dans le collecteur d'admission, soit la comparaison entre la deuxième valeur de consigne CONS₂ et le signal de mesure Pₐᵥₜ de la pression en amont de la turbine 26 du turbocompresseur.

Le premier étage 38 d'élaboration de la première valeur de consigne CONS₁ comporte également des moyens de mémorisation dans lesquels sont chargés un ensemble de valeurs de pré-positionnement de la soupape de décharge 35, sous la forme d'une cartographie de valeurs obtenues par apprentissage préalable en fonction du régime R du moteur et du débit D de carburant, éventuellement combinées à une valeur de correction définie en fonction de la pression en aval de la turbine 26.

Un additionneur 50 additionne le signal issu de la partie intégrale 44 du circuit de régulation 42 et d'une valeur de pré-positionnement de la soupape 35, extraite du premier étage 38, correspondant à une valeur R de régime du moteur et à un débit D de carburant.

Un circuit de seuillage 52 est utilisé pour limiter la valeur issue de l'additionneur 50.

L'unité centrale 34 incorpore par ailleurs un étage 54 d'élaboration d'un signal CPAVT d'activation et de désactivation de la régulation de la pression en amont de la turbine 26 du turbocompresseur. Ce signal CPAVT est élaboré en fonction de la valeur de la pression dans le collecteur d'admission, de la pression en amont de la turbine 26 du turbocompresseur et en fonction des première et deuxième valeurs de consigne.

Ce signal d'activation et de désactivation CPAVT pilote des commutateurs 53a et 53b associés la borne non inverseuse et la borne inverseuse du comparateur 48, de manière à commuter ces dernières respectivement soit sur la première valeur de consigne CONS₁ et sur le signal de mesure de pression dans le collecteur d'admission P_{col}, soit sur la deuxième valeur de consigne CONS₂, et sur le signal de mesure Pₐᵥₜ de la pression en amont de la turbine 26 du turbocompresseur 14.

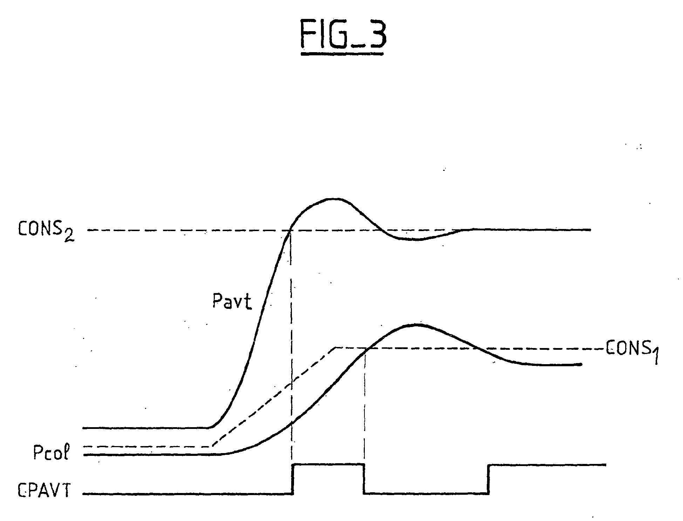

En d'autres termes, comme cela est représenté sur la figure 3, le signal d'activation et de désactivation est positionné à un niveau haut lorsque le signal de mesure de la pression avant la turbine Pₐᵥₜ est supérieur à la deuxième valeur de consigne CONS₂ correspondante. Le comparateur 48 est alors positionné de manière à effectuer une comparaison entre ce signal de mesure Pₐᵥₜ et la deuxième valeur de consigne CONS₂.

Dans ce cas, la régulation de pression dans le collecteur d'admission est désactivée, l'ouverture de la soupape de décharge 35 étant, dans ce cas, régulée à partir de la valeur de la pression régnant en amont de la turbine 26.

Au contraire, la régulation de la pression avant la turbine est désactivée (CPAVT=0) lorsque la pression régnant dans le collecteur d'admission est supérieure ou égale à la valeur de consigne CONS₁ correspondante. Les entrées du comparateur 48 sont alors commutées en conséquence.

A cet effet, l'étage 54 d'élaboration du signal CPAVT comporte des premiers moyens 56 de comparaison assurant une comparaison entre le signal de mesure P_{col} de la pression dans le collecteur d'admission et la valeur de consigne CONS₁ correspondante, ainsi que des deuxièmes moyens de comparaison assurant une comparaison entre le signal de mesure Pₐᵥₜ de la pression avant la turbine et la valeur de consigne CONS₂ correspondante, le résultat de ces comparaisons étant fourni à un circuit logique 60 approprié pour l'élaboration du signal d'activation et de désactivation CPAVT permettant d'obtenir le comportement précédemment décrit.

Des moyens de temporisation 62 sont, de préférence, incorporés entre le circuit logique 60 et les deuxièmes moyens de comparaison 58.

Comme indiqué précédemment, la sortie du circuit 54 d'élaboration du signal d'activation et de désactivation CPAVT est utilisée pour activer des commutateurs 53a et 53b pour commuter les bornes inverseuses et non inverseuses du comparateur 48, soit sur des signaux correspondant à la pression régnant dans le collecteur d'admission, soit sur des signaux correspondant à la pression régnant en amont de la turbine 26 du turbocompresseur.

Ce signal d'activation et de désactivation CPAVT est également utilisé pour piloter un commutateur 68 destiné à inhiber la partie dérivée 46 du circuit de régulation 42, et ce de façon facultative lorsque la soupape de décharge 35 est pilotée à partir d'une régulation de la pression en amont de la turbine 26 du turbocompresseur 14.

Enfin, ce signal d'activation et de désactivation CPAVT est utilisé pour piloter un commutateur 70 servant essentiellement à l'élaboration de la deuxième valeur de consigne CONS₂, soit à partir de la valeur de consigne CONS₂ₜ, soit à partir de la valeur de consigne CONS₂ₚ qui correspondent, comme indiqué précédemment, à des valeurs de consigne en régime transitoire et en régime permanent.

A cet effet, un circuit de sélection 72, élaboré essentiellement à partir de portes logiques et d'un circuit de temporisation, positionne la deuxième valeur de consigne CONS₂ à une valeur correspondant à la valeur de consigne CONS₂ₜ de pression avant turbine en régime transitoire dès qu'apparaît une transition du signal d'activation et de désactivation CPAVT tendant à activer la régulation de la pression en amont de la turbine, et ce, pendant une période de temps prédéterminée suffisante pour ne pas pénaliser le conducteur du véhicule.

A l'expiration de cette période de temps, le circuit de sélection 72 positionne la deuxième valeur de consigne CONS₂ à une valeur correspondant à la valeur de consigne CONS₂ₚ en régime permanent ou stabilisé.

Par ailleurs, l'unité centrale 34 est pourvue de moyens permettant de réaliser une régulation de la pression dans le collecteur d'admission même en cas d'un dysfonctionnement du capteur de mesure correspondant, afin d'éviter que le conducteur du véhicule soit pénalisé, en raison d'un tel dysfonctionnement, par un manque de puissance du moteur.

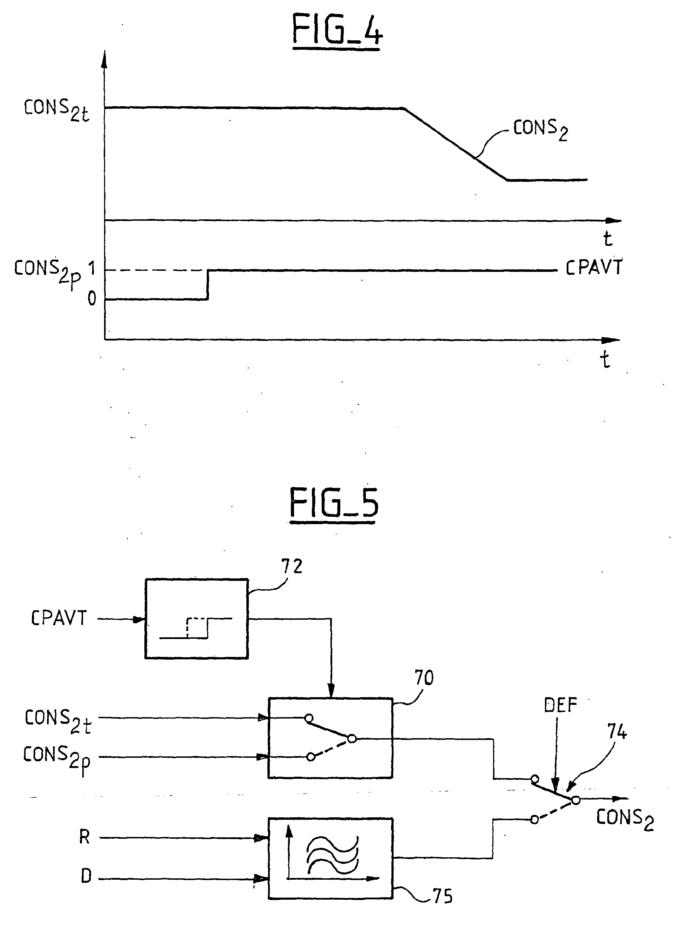

Comme on le voit sur la figure 5, ces moyens sont essentiellement basés sur l'utilisation d'un commutateur 74 raccordé à la sortie du commutateur 70 d'élaboration de la deuxième valeur de consigne CONS₂.

Ce commutateur 74 est piloté par un signal DEF signalant un dysfonctionnement du capteur de mesure de pression dans le collecteur d'admission. En réponse, il provoque l'élaboration de la deuxième valeur de consigne CONS₂ à partir d'une table 75 mémorisée dans le deuxième étage 40 d'élaboration de la deuxième valeur de consigne et dans laquelle sont chargées, comme mentionné précédemment, un ensemble de valeurs de consigne de pression avant turbine en fonction du régime R de fonctionnement du moteur et du débit D de carburant.

On obtient alors, selon ce mode dégradé, un mode de fonctionnement similaire à un mode de fonctionnement selon lequel le circuit d'alimentation du moteur en air serait dépourvu de moyens de régulation de pression en amont de la turbine.

On conçoit cependant qu'il est également possible, en variante, d'utiliser les valeurs de consigne disponibles dans le premier étage 38 d'élaboration de la première valeur de consigne CONS₁ afin d'éviter de prévoir des consignes spécifiques pour un tel mode de fonctionnement.

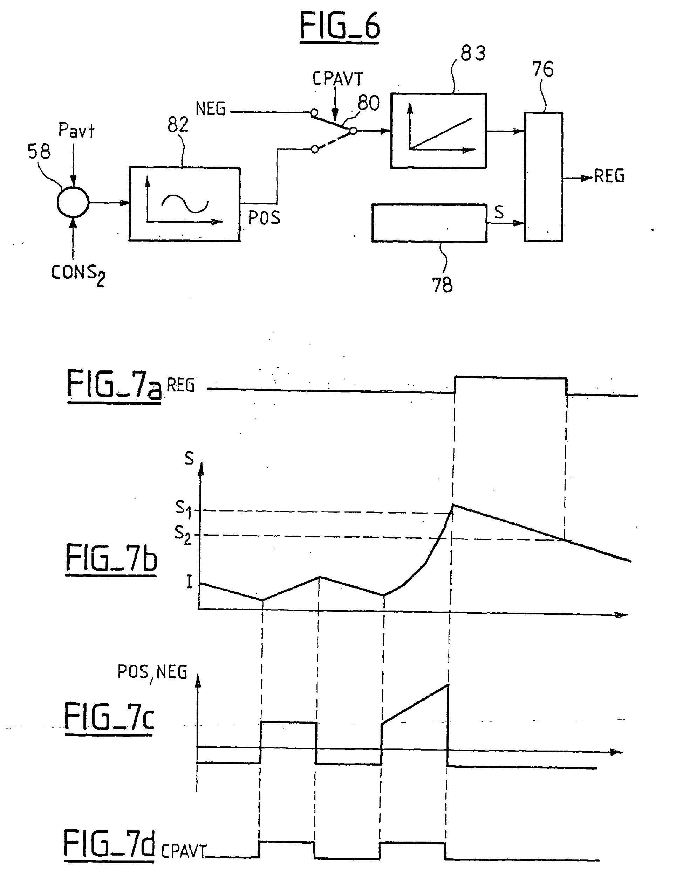

Enfin, en se référant maintenant aux figures 6 et 7, on voit que le système incorpore également des moyens permettant de provoquer la régénération du filtre à particules 22 lorsque la régulation de la pression avant turbine est trop souvent sollicitée, traduisant dès lors une présence de particules trop importante dans le filtre 22.

En se référant tout d'abord à la figure 6, ces moyens sont essentiellement basés sur l'utilisation d'un comparateur 76 réalisant une comparaison entre la valeur de sortie d'un circuit 83 d'exécution d'une fonction intégrale et une valeur de seuil S extraite d'une zone mémoire 78 correspondante, de manière à élaborer un signal de régénération REG en cas de dépassement de la valeur de seuil.

On utilise à cet effet un commutateur 80 piloté par le signal d'activation et de désactivation de la régulation de pression CPAVT, et raccordé au circuit 83 d'exécution de la fonction intégrale, soit à partir d'un facteur de proportionnalité négatif NEG lorsque la régulation de pression en amont de la turbine n'est pas sollicitée, soit à partir d'un facteur de proportionnalité positif POS, lorsque la régulation de pression en amont de la turbine est sollicitée.

De préférence, comme visible sur la figure 6, le facteur de proportionnalité positif POS utilisé pour attaquer le circuit 83 d'exécution de la fonction intégrale dépend de l'erreur entre la valeur de la pression Pₐᵥₜ mesurée avant la turbine et la valeur de consigne CONS₂ correspondante, de manière à faire croître le signal délivré par ce circuit 83 selon une pente accrue lorsque la différence entre le signal de mesure de pression Pₐᵥₜ avant turbine et la deuxième valeur de consigne CONS₂ croît.

Ainsi, par exemple, on peut utiliser la sortie du comparateur 58 dédié à cette comparaison pour extraire un facteur de proportionnalité POS de moyens de mémorisation 82 dans lesquels sont chargés un ensemble de facteurs de proportionnalité, en fonction de l'erreur entre le signal de mesure Pₐᵥₜ et la deuxième valeur de consigne.

Comme visible sur la figure 7, pour l'élaboration du signal REG de régénération du filtre à particules 22, on utilise de préférence ainsi un seuil S avec hystérésis, de manière à positionner à un niveau haut le signal de régénération REG lorsque le signal délivré par le circuit 83 d'exécution de la fonction intégrale dépasse une première valeur de seuil S₁ haute et à repositionner ce signal de régénération REG à niveau bas lorsque ce signal de sortie devient inférieure à une valeur de seuil S₂ basse.

## Revendications

1. Procédé de réglage du flux d'air dans le collecteur d'admission d'un moteur à combustion interne d'un véhicule automobile équipé d'un turbocompresseur (14) de suralimentation du moteur en air qui est entraîné par les gaz d'échappement du moteur, comprenant la mesure de la pression régnant dans le collecteur (18) d'admission et la commande d'un organe (35) de réglage de la puissance des gaz d'échappement de manière à réguler la pression régnant dans le collecteur (18) autour d'une première valeur de consigne de pression (CONS 1), le procédé comportant en outre les étapes consistant à :
- mesurer la pression régnant en amont de la turbine du turbocompresseur (14), en considérant le sens d'écoulement des gaz dans ce dernier ; et
- commander ledit organe de réglage (35) de manière à réguler la valeur de la pression en amont de la turbine du turbocompresseur autour d'une deuxième valeur de consigne de pression correspondant à une valeur maximale de pression autorisée en amont de la turbine du turbocompresseur,
**caractérisé en ce que** l'on élabore un signal d'activation et de désactivation (CPAVT) de la régulation de la pression en amont de la turbine du turbocompresseur (14) en fonction de la valeur de la pression dans le collecteur d'admission et de la pression en amont de la turbine du turbocompresseur et en fonction des première et deuxième valeurs de seuil.

2. Procédé selon la revendication 1, **caractérisé en ce que** l'on désactive la régulation de la pression en amont de la turbine du turbocompresseur lorsque la valeur de la pression dans le collecteur d'admission (18) est supérieure ou égale à la première valeur de consigne.

3. Procédé selon l'une des revendications 1 et 2, **caractérisé en ce que** l'on désactive la régulation de la pression régnant dans le collecteur d'admission lorsque la pression régnant en amont de la turbine du turbocompresseur est supérieure à la deuxième valeur de consigne.

4. Procédé selon l'une quelconque des revendications 1 à 3, **caractérisé en ce que** la régulation de la pression régnant dans le collecteur d'admission est effectuée au moyen d'une boucle de régulation recevant en entrée la première valeur de consigne et le signal de mesure (Pcol) de la pression régnant dans le collecteur d'admission et délivrant en sortie un signal de commande de l'organe de réglage, et **en ce que** l'on pilote des moyens de commutation disposés en entrée de la boucle de régulation de manière à présenter en entrée de cette dernière, d'une part, l'un ou l'autre des signaux de mesure de pression parmi le signal de mesure (Pavt) de la pression en amont de la turbine du turbocompresseur et le signal de mesure (Pcol) de la pression dans le collecteur et, d'autre part, l'une ou l'autre des première et deuxième valeur de consigne, en fonction de la valeur du signal d'activation et de désactivation (CPAVT) de la régulation de la pression en amont de la turbine du turbocompresseur.

5. Procédé selon l'une quelconque des revendications 1 à 4, **caractérisé en ce que** la deuxième valeur de consigne est élaborée à partir d'une valeur de consigne en régime transitoire et d'une valeur de consigne en régime permanent, inférieure à la valeur de consigne en régime transitoire, et **en ce que** ladite deuxième valeur de consigne est positionnée à une valeur égale à la valeur de consigne en régime transitoire lors d'une transition du signal d'activation et de désactivation de la régulation de la pression en amont de la turbine du turbocompresseur tendant à activer cette régulation et est positionnée à une valeur égale à la valeur de consigne en régime permanent à l'expiration d'une période de temps prédéterminée.

6. Procédé selon l'une quelconque des revendications 1 à 5, **caractérisé en ce que** l'on procède à l'activation de la régulation de la pression en amont de la turbine du turbocompresseur à l'expiration d'une période de temps prédéterminée après apparition d'une transition dudit signal d'activation et de désactivation tendant à activer cette régulation.

7. Procédé selon l'une quelconque des revendications 1 à 6, **caractérisé en ce que** l'on régule la pression régnant dans le collecteur d'admission à partir de la régulation de la pression en amont de la turbine du turbocompresseur en cas de dysfonctionnement de moyens de mesure de la pression dans le collecteur d'admission.

8. Procédé selon la revendication 7, **caractérisé en ce qu'**en cas de dysfonctionnement desdits moyens de mesure, la deuxième valeur de consigne de pression est élaborée en fonction du régime de fonctionnement du moteur et de la consommation en carburant de ce dernier.

9. Procédé selon l'une quelconque des revendications 1 à 8, **caractérisé en ce que** l'on surveille la durée d'activation de la régulation de la pression en amont de la turbine du turbocompresseur et l'on provoque une régénération d'un filtre à particules équipant la ligne d'échappement du moteur en cas d'activation de cette régulation de pression de la turbine du turbocompresseur pendant une durée supérieure à une valeur de seuil.

10. Procédé selon la revendication 9, **caractérisé en ce que** l'on surveille la durée d'activation de ladite régulation en comparant la sortie d'un circuit (83) d'exécution d'une fonction intégrale activé en cas d'activation de ladite régulation avec ladite valeur de seuil.

11. Procédé selon la revendication 10, **caractérisé en ce que** l'on module la valeur de facteurs de proportionnalité et d'intégrale du circuit (83) d'exécution de la fonction intégrale en fonction de la différence entre la pression régnant en amont de la turbine du turbocompresseur et la deuxième valeur de consigne.

12. Système de réglage du flux d'air dans le collecteur d'admission d'un moteur à combustion interne équipé d'un turbocompresseur (14) de suralimentation du moteur en air qui est entraîné par les gaz d'échappement et d'une ligne d'échappement pourvue d'un filtre à particules (22), comprenant des moyens de mesure de la pression régnant dans le collecteur d'admission et un organe de réglage de la puissance des gaz d'échappement (35) raccordés à une unité centrale (34) comprenant une boucle de régulation (36) pilotant l'organe de réglage de manière à réguler la pression régnant dans le collecteur d'admission autour d'une première valeur de consigne, des moyens de mesure de la pression régnant en amont de la turbine (26) du turbocompresseur et des moyens de régulation pilotant l'organe de réglage de manière à réguler la pression en amont du turbocompresseur autour d'une deuxième valeur de consigne,
**caractérisé en ce que** les moyens de régulation sont formés à partir de ladite boucle de régulation, et **en ce qu'**il comporte des moyens de commutation (53a, 53b) pour présenter en entrée de cette dernière, d'une part, l'un ou l'autre des signaux de mesure de pression parmi le signal de mesure de la pression en amont de la turbine (26) du turbocompresseur et le signal de mesure de la pression dans le collecteur et, d'autre part, l'une ou l'autre des première et deuxième valeurs de consigne.

13. Utilisation d'un système selon la revendication 12 pour le réglage du flux d'air admis dans le collecteur d'admission d'un moteur à combustion interne de type Diesel.

## Claims

1. Method for adjusting the air flow in the inlet manifold of an internal combustion engine of a motor vehicle fitted with a turbocharger (14) for supercharging the engine with air that is driven by the engine exhaust gases, comprising the measurement of the pressure existing in the inlet manifold (18) and the control of a member (35) for adjusting the power of the exhaust gases so as to regulate the pressure existing in the manifold (18) around a first pressure setpoint value (CONS1), the method also comprising the steps consisting in:
- measuring the pressure existing upstream of the turbine of the turbocharger (14), considering the direction of flow of the gases in the latter; and
- controlling the said adjustment member (35) so as to regulate the value of the pressure upstream of the turbocharger turbine around a second pressure setpoint value corresponding to a maximum authorized pressure value upstream of the turbocharger turbine,
**characterized in that** an activation and deactivation (CPAVT) signal of the regulation of the pressure upstream of the turbine of the turbocompressor (14) is generated according to the value of the pressure in the inlet manifold and the pressure upstream of the turbocompressor turbine and according to the first and second threshold values.

2. Method according to Claim 1, **characterized in that** the regulation of the pressure upstream of the turbocharger turbine is deactivated when the value of the pressure in the inlet manifold (18) is greater than or equal to the first setpoint value.

3. Method according to one of Claims 1 and 2, **characterized in that** the regulation of the pressure existing in the inlet manifold is deactivated when the pressure existing upstream of the turbocharger turbine is greater than the second setpoint value.

4. Method according to any one of Claims 1 to 3, **characterized in that** the pressure existing in the inlet manifold is regulated by means of a regulation loop receiving as an input the first setpoint value and the measurement signal (Pcol) for the pressure existing in the inlet manifold and delivering as an output a signal for controlling the adjustment member, and **in that** switching means arranged at the input of the regulation loop are controlled so as to present as an input of the latter, on the one hand, one or other of the pressure measurement signals from the measurement signal (Pavt) for the pressure upstream of the turbocharger turbine and the measurement signal (Pcol) for the pressure in the manifold and, on the other hand, one or other of the first and second setpoint values, according to the value of the signal (CPAVT) for activation and deactivation of the regulation of the pressure upstream of the turbocharger turbine.

5. Method according to any one of Claims 1 to 4, **characterized in that** the second setpoint value is generated from a setpoint value at transitory speed and from a setpoint value at permanent speed, less than the setpoint value at transitory speed, and **in that** the said second setpoint value is positioned at a value equal to the setpoint value at transitory speed during a transition of the signal for activation and deactivation of the regulation of the pressure upstream of the turbocharger turbine tending to activate this regulation and is positioned at a value equal to the setpoint value at permanent speed on expiry of a predetermined time period.

6. Method according to any one of Claims 1 to 5, **characterized in that** the regulation of the pressure upstream of the turbocharger turbine is activated on expiry of a predetermined time period after appearance of a transition of the said activation and deactivation signal tending to activate this regulation.

7. Method according to any one of Claims 1 to 6, **characterized in that** the pressure existing in the inlet manifold is regulated based on the regulation of the pressure upstream of the turbocharger turbine in the event of malfunction of the means for measuring the pressure in the inlet manifold.

8. Method according to Claim 7, **characterized in that**, in the event of malfunction of the said measurement means, the second pressure setpoint value is generated according to the operating speed of the engine and the fuel consumption of the latter.

9. Method according to any one of Claims 1 to 8, **characterized in that** the duration of activation of the regulation of the pressure upstream of the turbocharger turbine is supervised and a particle filter fitted to the engine exhaust line is regenerated if this regulation of the pressure of the turbocharger turbine is activated for a period greater than a threshold value.

10. Method according to Claim 9, **characterized in that** the duration of activation of the said regulation is supervised by comparing the output of an integral function execution circuit (83) activated if the said regulation is activated with the said threshold value.

11. Method according to Claim 10, **characterized in that** the value of proportionality and integral factors of the integral function execution circuit (83) is modulated according to the difference between the pressure existing upstream of the turbocharger turbine and the second setpoint value.

12. System for adjusting the air flow in the inlet manifold of an internal combustion engine fitted with a turbocharger (14) for supercharging the engine with air that is driven by the exhaust gases and an exhaust line provided with a particle filter (22), comprising means for measuring the pressure existing in the inlet manifold and a member for adjusting the power of the exhaust gases (35) connected to a central unit (34) comprising a regulation loop (36) controlling the adjustment member so as to regulate the pressure existing in the inlet manifold around a first setpoint value, means for measuring the pressure existing upstream of the turbocharger turbine (26) and regulation means controlling the adjustment member so as to regulate the pressure upstream of the turbocharger around a second setpoint value, **characterized in that** the regulation means are formed from the said regulation loop, and **in that** it comprises switching means (53a, 53b) for presenting at the input of the latter, on the one hand, one or other of the pressure measurement signals from the measurement signal for the pressure upstream of the turbocharger turbine (26) and the measurement signal for the pressure in the manifold and, on the other hand, one or other of the first and second setpoint values.

13. Use of a system according to Claim 12 for the adjustment of the air flow admitted into the inlet manifold of an internal combustion engine of the Diesel type.

## Patentansprüche

1. Verfahren zur Einstellung des Luftstroms im Ansaugkrümmer eines Verbrennungsmotors eines Kraftfahrzeugs, der mit einem Turbokompressor (14) zum Aufladen des Motors mit Luft ausgestattet ist, der von den Abgasen des Motors angetrieben wird, das die Messung des im Ansaugkrümmer (18) herrschenden Drucks und die Steuerung eines Einstellorgans (35) der Leistung der Abgase aufweist, um den im Krümmer (18) herrschenden Druck um einen ersten Drucksollwert (CONS1) herum zu regulieren, wobei das Verfahren außerdem die Schritte aufweist, die darin bestehen:
- den stromaufwärts vor der Turbine des Turbokompressors (14) herrschenden Druck zu messen, unter Berücksichtigung der Strömungsrichtung der Gase in diesem letzteren; und
- das Einstellorgan (35) so zu steuern, dass der Wert des Drucks stromaufwärts vor der Turbine des Turbokompressors um einen zweiten Drucksollwert herum reguliert wird, der einem stromaufwärts vor der Turbine des Turbokompressors erlaubten maximalen Druckwert entspricht,
**dadurch gekennzeichnet, dass** ein Aktivierungs- und Deaktivierungssignal (CPAVT) der Druckregulierung stromaufwärts vor der Turbine des Turbokompressors (14) in Abhängigkeit vom Wert des Drucks im Ansaugkrümmer und des Drucks stromaufwärts vor der Turbine des Turbokompressors und in Abhängigkeit vom ersten und vom zweiten Schwellwert erarbeitet wird.

2. Verfahren nach Anspruch 1, **dadurch gekennzeichnet, dass** die Regulierung des Drucks stromaufwärts vor der Turbine des Turbokompressors deaktiviert wird, wenn der Wert des Drucks im Ansaugkrümmer (18) höher als der oder gleich dem ersten Sollwert ist.

3. Verfahren nach einem der Ansprüche 1 und 2, **dadurch gekennzeichnet, dass** die Regulierung des im Ansaugkrümmer herrschenden Drucks deaktiviert wird, wenn der stromaufwärts vor der Turbine des Turbokompressors herrschende Druck höher ist als der zweite Sollwert.

4. Verfahren nach einem der Ansprüche 1 bis 3, **dadurch gekennzeichnet, dass** die Regulierung des im Ansaugkrümmer herrschenden Drucks mittels einer Regelschleife durchgeführt wird, die am Eingang den ersten Sollwert und das Messsignal (Pcol) des im Ansaugkrümmer herrschenden Drucks empfängt und am Ausgang ein Steuersignal des Einstellorgans liefert, und dass Schaltmittel, die am Eingang der Regelschleife angeordnet sind, so gesteuert werden, dass am Eingang der Regelschleife einerseits das eine oder das andere der Druckmesssignale, das Messsignal (Pavt) des Drucks stromaufwärts vor der Turbine des Turbokompressors, oder das Messsignal (Pcol) des Drucks im Krümmer, und andererseits der eine oder der andere des ersten und des zweiten Sollwerts in Abhängigkeit vom Wert des Aktivierungs- und Deaktivierungssignals (CPAVT) der Regulierung des Drucks stromaufwärts vor der Turbine des Turbokompressors vorliegen.

5. Verfahren nach einem der Ansprüche 1 bis 4, **dadurch gekennzeichnet, dass** der zweite Sollwert ausgehend von einem Sollwert im Übergangsbetrieb und von einem Sollwert im Dauerbetrieb niedriger als der Sollwert im Übergangsbetrieb erarbeitet wird, und dass der zweite Sollwert auf einen Wert gleich dem Sollwert im Übergangsbetrieb positioniert wird bei einem Übergang des Aktivierungs- und Deaktivierungssignals der Regulierung des Drucks stromaufwärts vor der Turbine des Turbokompressors, der die Tendenz hat, diese Regulierung zu aktivieren, und auf einen Wert gleich dem Sollwert im Dauerzustand positioniert wird bei Ablauf einer vorbestimmten Zeitperiode.

6. Verfahren nach einem der Ansprüche 1 bis 5, **dadurch gekennzeichnet, dass** die Aktivierung der Regulierung des Drucks stromaufwärts vor der Turbine des Turbokompressors bei Ablauf einer vorbestimmten Zeitperiode nach dem Auftreten eines Übergangs des Aktivierungs- und Deaktivierungssignals durchgeführt wird, der die Tendenz hat, diese Regulierung zu aktivieren.

7. Verfahren nach einem der Ansprüche 1 bis 6, **dadurch gekennzeichnet, dass** der im Ansaugkrümmer herrschende Druck im Fall einer Betriebsstörung von Messmitteln des Drucks im Ansaugkrümmer ausgehend von der Regulierung des Drucks stromaufwärts vor der Turbine des Turbokompressors reguliert wird.

8. Verfahren nach Anspruch 7, **dadurch gekennzeichnet, dass** bei einer Betriebsstörung der Messmittel der zweite Drucksollwert in Abhängigkeit vom Betriebszustand des Motors und dessen Kraftstoffverbrauch erarbeitet wird.

9. Verfahren nach einem der Ansprüche 1 bis 8, **dadurch gekennzeichnet, dass** die Aktivierungsdauer der Regulierung des Drucks stromaufwärts vor der Turbine des Turbokompressors überwacht wird, und dass im Fall der Aktivierung dieser Druckregulierung der Turbine des Turbokompressors während einer über einem Schwellwert liegenden Dauer eine Regenerierung eines die Auspuffleitung des Motors bestückenden Partikelfilters bewirkt wird.

10. Verfahren nach Anspruch 9, **dadurch gekennzeichnet, dass** die Aktivierungsdauer der Regulierung überwacht wird, indem das Ausgangssignal einer Ausführungsschaltung (83) einer Integralfunktion, die im Fall der Aktivierung der Regulierung aktiviert wird, mit dem Schwellwert verglichen wird.

11. Verfahren nach Anspruch 10, **dadurch gekennzeichnet, dass** der Wert von Proportionalitätsfaktoren und Integralfaktoren der Ausführungsschaltung (83) der Integralfunktion in Abhängigkeit von der Differenz zwischen dem stromaufwärts vor der Turbine des Turbokompressors herrschenden Druck und dem zweiten Sollwert moduliert wird.

12. System zur Einstellung des Luftstroms in dem Ansaugkrümmer eines Verbrennungsmotors, der mit einem Turbokompressor (14) zum Aufladen des Motors mit Luft, der von den Abgasen angetrieben wird, und mit einer mit einem Partikelfilter (22) versehenen Auspuffleitung ausgestattet ist, die Messmittel des im Ansaugkrümmer herrschenden Drucks und ein Einstellorgan der Leistung der Auspuffgase (35) aufweist, die mit einer Zentraleinheit (34) verbunden sind, die eine Regelschleife (36), die das Einstellorgan so steuert, dass der im Ansaugkrümmer herrschende Druck um einen ersten Sollwert herum reguliert wird, Mittel zum Messen des stromaufwärts vor der Turbine (26) des Turbokompressors herrschenden Drucks und Regulierungsmittel aufweist, die das Einstellorgan so steuern, dass der Druck stromaufwärts vor dem Turbokompressor um einen zweiten Sollwert herum reguliert wird,
**dadurch gekennzeichnet, dass** die Regulierungsmittel ausgehend von der Regelschleife geformt werden, und dass es Schaltmittel (53a, 53b) aufweist, um am Eingang dieser Regelschleife einerseits das eine oder das andere der Druckmesssignale, das Messsignal des Drucks stromaufwärts vor der Turbine (26) des Turbokompressors oder das Messsignal des Drucks im Krümmer, und andererseits den einen oder den anderen des ersten und des zweiten Schwellwerts anzugeben.

13. Verwendung eines Systems nach Anspruch 12 zur Einstellung des in den Ansaugkrümmer eines Verbrennungsmotors vom Typ Dieselmotor angesaugten Luftstroms.
